# EUROPÄISCHE PATENTSCHRIFT

(11) **EP 2 039 568 B1**
(45) Veröffentlichungstag und Bekanntmachung des Hinweises auf die Patenterteilung: **17.04.2013**
(21) Anmeldenummer: 09100002.6
(22) Anmeldetag: 17.11.2000
(51) Int. Cl.: H04J 3/06, B01D 45/04, B60R 16/02, G06F 1/14, H04L 12/42

(54) **Verfahren und Vorrichtung zum Austausch von Daten zwischen wenigstens zwei mit einem Bussystem verbundenen Teilnehmern**
Method and device for data exchange between at least two subscribers connected by a bus system
Procédé et dispositif d'échange de données entre au moins deux abonnés connectés par un système de bus

(30) Priorität: 05.01.2000 DE 10000303
(43) Veröffentlichungstag der Anmeldung: 25.03.2009
(62) Teilanmeldung aus: 00125070.3
(73) Patentinhaber: ROBERT BOSCH GMBH, 70442 Stuttgart (DE)
(72) Erfinder: Hartwich, Florian, 72762, Reutlingen (DE); Weigl, Andreas, 76351, Linkenheim-Hochstetten (DE); Mueller, Bernd, 71229, Leonberg (DE); Fuehrer, Thomas, 70839, Gerlingen (DE); Hugel, Robert, 76199, Karlsruhe (DE)

(56) Entgegenhaltungen:
- EP-A- 0 539 704
- US-A- 5 621 895
- US-A- 5 694 542
- FUEHRER T ET AL: "TIME TRIGGERED COMMUNICATION ON CAN (TIME TRIGGERED CAN - TTCAN)" PROCEEDINGS OF THE INTERNATIONAL CAN CONFERENCE, 2000, Seiten 1-7, XP002905415

## Beschreibung

### Stand der Technik

Die Erfindung betrifft Verfahren und Vorrichtung zum Austausch von Daten zwischen wenigstens zwei mit einem Bussystem verbundenen Teilnehmern gemäß den Merkmalen der unabhängigen Ansprüche.

Als Stand der Technik in der automobilen Vernetzung wird seit einigen Jahren das CAN-Protokoll eingesetzt. Die Kommunikation ist dort ereignisgesteuert geregelt. Sehr große Lasten können erzeugt werden, wenn das Senden verschiedener Nachrichten zur gleichen Zeit initiiert werden soll. Der nicht-destruktive Arbitrierungsmechanismus von CAN garantiert, daß sequentielle Senden aller Nachrichten gemäß der Priorität ihrer Identifier bzw. Kennungen. Für harte Echtzeitsysteme muß vorab eine Analyse der Laufzeiten und Buslasten für das gesamte System gemacht werden, um sicher zu gehen, daß alle Nachrichten-Deadlines eingehalten werden können (selbst unter Spitzenbelastung).

Es gibt bereits Kommunikationsprotokolle, die auf einer zeitgesteuerten Abarbeitung basieren, wie z.B. TTP/C oder Interbus-S. Die Besonderheit hierbei ist, daß der Buszugriff bereits vorab durch Vorgabe von Sendezeitpunkten geplant wird. Während der Laufzeit, kann es somit zu keinen Kollisionen kommen. Ebenso wird aber eine Spitzenlast am Komnmnikationsbus vermieden. Dabei ist der Bus also häufig nicht vollständig ausgelastet.

Eine solche verteille Synchronization zeigt das US-Patent 5,694,547. Darin wird eine zeitgesteuerte Kommunikation mit verteilter Uhrensynchronisation gemäß TTP/C dargestellt. Hierbei wird jeder Knoten mit jedem anderen derart synchronisiert, dass abweichend von einer a priori bekannten Sende- bzw. Empfangszeit mittels Mittelwertbildung synchronisiert wird, wie dies in Kopelz, H. and Ochsenreiter, W.; "Clock Synchronisation in Distributed Real-Time system"; IDEE Transactions on computers, Vol. C-36, Seiten_933-940, August 1987, gezeigt ist.

Das US-Patent 5,621,895 zeigt ein Netzwerk mit mehreren Teilnehmerstationen, welche über eine aktive Sternkopplung gekoppelt sind. Durch Ausmessen und Korreklur, der individuellen der Teilnehmer wird es ermöglicht, dass die verschiedenen Teilnehmer Nachrichten kollisionsfrei in eine Serie von von einem Master bereitgestellen Datenrahmen einfügen können.

Bei solchen zeitgesteuerten Systemen mit verteilten Uhren sind Synchronisationsmechanismen erforderlich und bekannt, wie z.B. Synchronisation auf Pegelwechsel einzelner Bits usw.

Dadurch werden häufig zum Ausgleich von Toleranzen Abstände zwischen einzelnen Nachrichten notwendig, wodurch die Effizienz der Busauslastung herabgesetzt wird.

Es zeigt sich, daß der Stand der Technik nicht in jeder Hinsicht optimale Ergebnisse zu liefern vermag.

### Vorteile der Erfindung

Die Erfindung beinhaltet somit ein Verfahren und eine Vorrichtung zum Austausch von Daten in Nachrichten zwischen wenigstens zwei Teilnehmern, welche mittels eines Bussystems verbunden sind und eigene Zeitbasen aufweisen, wobei die, die Daten enthaltenden Nachrichten durch die Teilnehmer über das Bussystem übertragen werden und ein erster Teilnehmer in einer Funktion als Zeitgeber die Nachrichten zeitlich derart steuert, dass er wiederholt eine Referenznachricht, die eine Zeitinformation bezüglich der Zeitbasis des ersten Teilnehmers enthält, in einem vorgebbaren zeitlichen Abstand über den Bus überträgt, wobei der wenigstens zweite Teilnehmer mittels seiner Zeitbasis eine eigene Zeitinformation abhängig von der Zeitinformation des ersten Teilnehmers bildet, wobei aus den beiden Zeitinformationen ein Korrekturwert, ermittelt wird und der zweite Teilnehmer seine Zeitinformation und/oder seine Zeitbasis abhängig von dem Korrekturwert anpasst.

Dabei wird als zugrundeliegendes Bussystem bzw. Busprotokoll insbesondere zweckmässigerweise der CAN-Bus eingesetzt. Die Erfindung bezieht sich aber allgemein auf jedes Bussystem bzw. Busprotokoll bei welchem eine objektorientierte Nachrichten- bzw. Datenübertragung eingesetzt wird, also die Nachricht und/oder die darin enthaltenen Daten durch eine Kennung (Identifier) eindeutig erkennbar sind. Dies gilt für alle Busse bei denen also nicht die Teilnehmer sondern die Nachrichten bzw. deren Daten adressiert werden, insbesondere den CAN-Bus.

Dabei werden die Nachrichten vorteilhafterweise durch einen ersten Teilnehmer zeitlich derart gesteuert, dass der erste Teilnehmer wiederholt eine Referenznachricht in wenigstens einem vorgebbaren zeitlichen Abstand über den Bus überträgt und der zeitliche Abstand in Zeitfenster vorgebbarer Länge unterteilt wird, wobei die Nachrichten in den Zeitfenstern übertragen werden.

Die Erfindung umfaßt vorteilhafterweise somit gegenüber dem Stand der Technik eine höhere Protokollschicht zu dem eigentlichen Bus(CAN)-Protokoll, das im Rahmen der erfindungsgemäßen zeitgesteuerten Kommunikation unverändert erhalten bleibt. Die zeitgesteuerte Kommunikation erlaubt es somit vorteilhafterweise, den Bus voll auszulasten und gleichzeitig die Latenzzeiten für jede Nachricht auf einem definierten Wert zu halten.

Die Erfindung umfaßt also eine zyklisch ablaufende Übertragung von Bus(CAN)-Nachrichten. Dadurch wird ein deterministisches und zusammensetzbares Kommunikationssystem erzeugt. Ein solches System wird bei dieser Erfindung im Weiteren als TTCAN bezeichnet. Ebenso wird im Weiteren von einem CAN-Bus ausgegangen, wobei wie oben genannt die Überlegungen allgemein für alle Bussysteme bzw. Busprotokolle mit objektorientierter Nachrichtenübertragung gelten.

Zweckmäßigerweise werden die Referenznachricht und die nachfolgenden Zeitfenster bis zur nächsten Referenznachricht zu einem ersten Zyklus vorgebbarer Länge und/oder vorgebbarer Struktur zusammengefasst, wobei die Struktur der Länge, Anzahl und zeitlichen Position der auf die Referenznachricht folgenden Zeitfenster in dem zeitlichen Abstand entspricht.

Weiterhin werden vorteilhafterweise mehrere erste Zyklen gleicher Struktur zu einem zweiten Zyklus zusammengefasst, wobei in dem zweiten Zyklus auch Nachrichten in Zeitfenstern wiederholt übertragen werden, deren zeitlicher Abstand größer ist als die zeitliche Länge des ersten Zyklus.

Zweckmässigerweise unterbleibt in wenigstens einem Zeitfenster des ersten oder des zweiten Zyklus eine zyklische Nachrichtenübertragung. In diesen zunächst leeren Zeitfenstern können dann arbitrierende Nachrichten übertragen werden, also solche, die nicht zyklisch übertragen werden müssen sondern wenn z.B. bestimmte Abläufe beendet sind zur Verfügung stehen.

Vorteilhafterweise wird jeder erste Zyklus mit einer Referenznachricht gestartet und der wenigstens zweite Teilnehmer ermittelt einen Abstand seiner Zeitbasis zur Zeitbasis des ersten Teilnehmers. Damit kann zweckmässigerweise aus der Differenz zweier Abstände der Zeitbasen der wenigstens zwei Teilnehmer der Korrekturwert ermittelt werden.

Dadurch kann vorteilhafterweise ein Abgleichen der Ganggenauigkeit der in einem TTCAN-System verteilten lokalen Uhren erfolgen, um Sende- und Empfangszeitpunkte genauer als im Stand der Technik zu synchronisieren.

Weiterhin von Vorteil ist, dass die Uhren in den einzelnen Stationen dadurch eine größere Toleranz der Ganggenauigkeit (billigere Bauelemente, insbesondere Oszillatoren) zwischen den Synchronisationsintervallen aufweisen können.

Zweckmässigerweise können die ersten Zyklen oder Basiszyklen (Abstand zwischen zwei Referenzbotschaften) größer werden womit die Effizienz der Busauslastung steigt.

Weiterhin von Vorteil ist, dass die Länge eines Basiszyklus nicht mehr durch die Toleranz der einzelnen Uhren limitiert ist und dass die bei anderen Verfahren zum Ausgleich von Toleranzen nötigen Abstände zwischen den einzelnen Botschaften (sog. "Inter-frame-gaps") entfallen können.

Weitere Vorteile und vorteilhafte Ausgestaltungen ergeben sich aus der Beschreibung und den Merkmalen der Ansprüche.

### Zeichnung

Die Erfindung wird nachfolgend anhand der in der Zeichnung enthaltenen Figuren dargestellt.

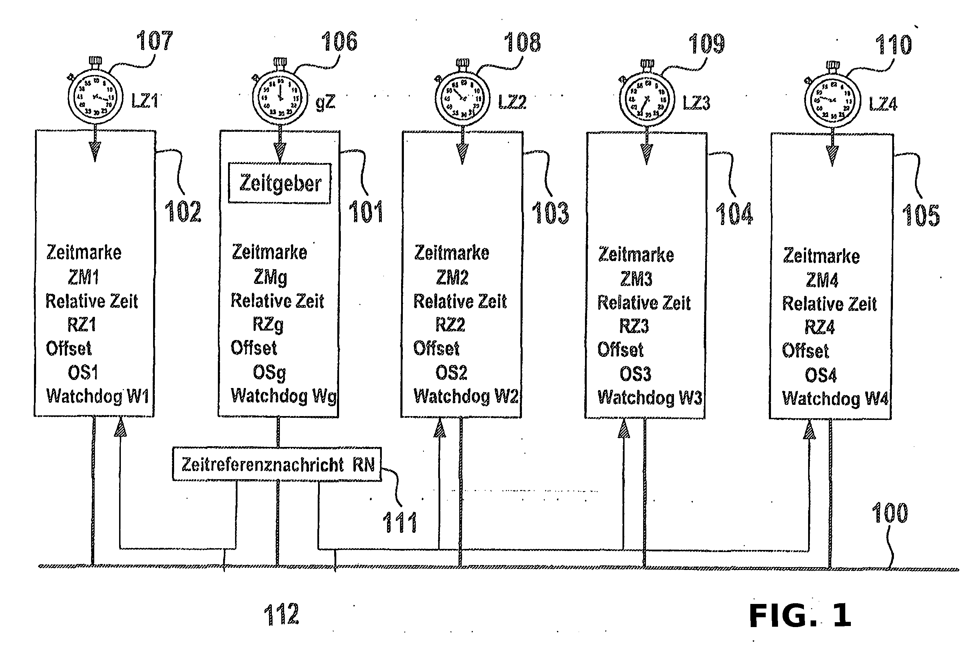

Dabei zeigt Figur 1 schematisch ein Bussystem mit mehreren Teilnehmern.

In Figur 2 ist der prinzipielle Ablauf der ersten Zyklen oder Basiszyklen und der zweiten Zyklen, der Gesamtzyklen über der Zeit dargestellt.

Figur 3 veranschaulicht im Detail die Anlage und Nachrichtenbelegung der Zeitfenster.

In Figur 4 wird dann ein Gesamtzyklus mit 7 Basiszyklen und diversen Sendegruppen der Nachrichten sowie arbitrierender Nachrichten dargestellt.

Figur 5 zeigt in Anlehnung an Figur 1 die Korrektur (Driftkorrektur) der lokalen Zeitbasen bzw. Zeitinformationen.

In Figur 6 ist in Form eines Blockschaltbildes ein Beispiel für die Driftkorrektur selbst detailliert dargestellt. Dieses Blockschaltbild kann in Hardware und/oder Software realisiert werden.

### Beschreibung der Ausführungsbeispiele

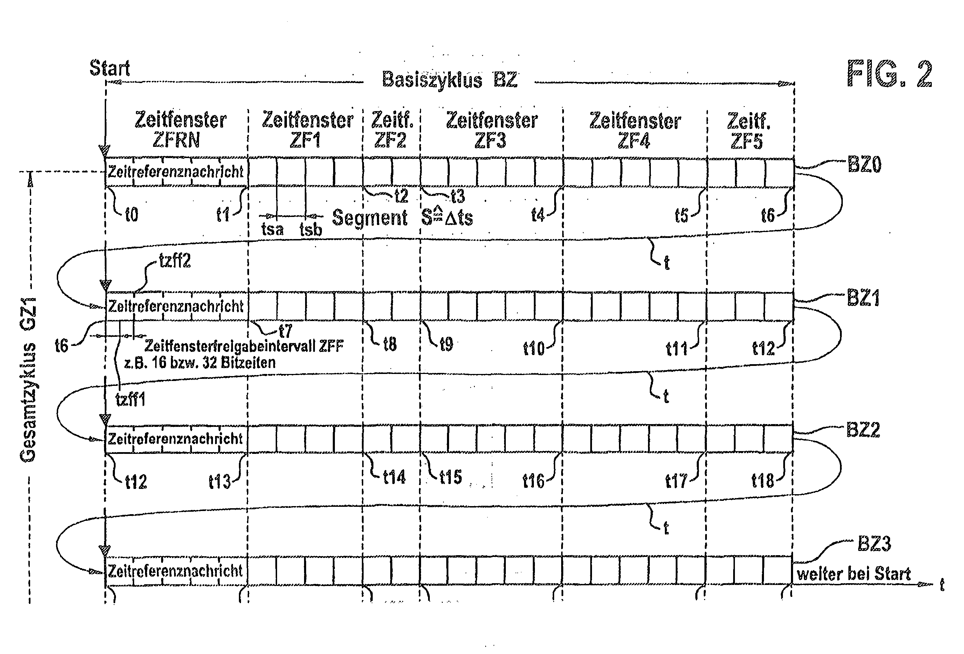

TTCAN basiert im wesentlichen auf einer zeitgesteuerten, periodischen Kommunikation, die durch einen Zeitgeber (Knoten, Teilnehmer) mit Hilfe einer Zeitreferenznachricht, oder kürzer Referenznachricht RN getaktet wird. Die Periode bis zur nächsten Referenznachricht RN wird als Basiszyklus bezeichnet und unterteilt sich in n Zeitfenster (siehe Figur 2). Jedes Zeitfenster erlaubt das exklusive Senden einer periodischen Nachricht mit unterschiedlicher Länge. Diese periodischen Nachrichten werden in einem TTCAN-Controller durch Verwendung von Zeitmarken, die mit dem Ablauf einer logischen relativen Zeit gekoppelt sind, gesendet. TTCAN erlaubt aber auch die Berücksichtigung von freien Zeitfenstern. Diese Zeitfenster können für sogenannte spontane Nachrichten genutzt werden, wobei der Zugriff innerhalb dieser Zeitfenster auf den Bus über das Arbitrierungsschema von CAN genutzt wird (arbitrierende Nachrichten). Die Synchronisation der Zeitgeber-Uhr (Globale Zeit gZ) mit der internen lokalen Zeit der einzelnen Knoten lZ1 bis lZ4 wird berücksichtigt und effizient umgesetzt.

Figur 1 zeigt ein Bussystem 100 mit mehreren Busteilnehmern 101 bis 105. Jeder Teilnehmer 101 bis 105 besitzt dabei eine eigene Zeitbasis 106 bis 110, die einerseits durch ein interners Mittel, wie eine Uhr, Zähler, Taktgenerator, etc.oder extern zu dem jeweiligen Teilnehmer übertragen werden kann. Die jeweilige lokale Zeitbasis lZ1 bis lZ4 ist insbesondere ein Zähler, z.B. 16-bit aufwärtszählend, der lediglich durch einen HW-Reset beeinflußt werden darf. Die lokale Zeitbasis ist hier in jedem Knoten bzw. Teilnehmer 102 bis 105 implementiert. Ein Teilnehmer, der Zeitgeber, 101 besitzt dabei eine exponierte Stellung. Seine Zeitbasis wird als globale Zeitbasis 106 mit der globalen Zeit gZ bezeichnet und ist entweder in dem Zeitgeber 101 implementiert oder wird extern an diesen übertragen. Die globale Zeit gZ wird prinzipiell in jedem Knoten aus der lokalen Zeitbasis 107 bis 110 bzw. der lokalen Zeit lZ (lZ1 bis lZ4) und einem Offset OS1 bis OS4 gebildet. Dieser Offset Osg beim Zeitgeber 101 ist in der Regel gleich Null (Osg = 0). Alle anderen Knoten bilden ihre Sicht auf die globale Zeit gZ aus der lokalen Zeit lZ (lZ1 bis lZ4) und dem lokalen Offset OS1 bis OS4 und OSg wenn OSg ≠ 0. Der Fall, dass OSg nicht Null ist, tritt z.B. auf wenn die globale Zeit gZ von aussen an den Zeitgeber 101 übertragen wird, und dieser zusätzlich eine eigene Zeitbasis 106 enthält. Dann wird auch der Zeitgeber auf die globale Zeit gZ geeicht und gZ und die Zeitbasis 106 stimmen eventuell nicht überein. Der lokale Offset ist die Differenz zwischen der lokalen Zeit zum Sendezeitpunkt (SOF, Start Of Frame) der Referenznachricht und der vom Zeitgeber in dieser Referenznachricht übertragenen Globalen Zeit.

Lokale Zeitbasis und die Globale Zeit

Lokale Zeitbasis: Die lokale Zeitbasis ist ein Zähler, z.B. 16-bit aufwärtszählend, der lediglich durch einen HW-Reset beeinflußt werden darf. Die lokale Zeitbasis ist in jedem Knoten implementiert.

Referenzmarken Zwischenregister: Bei jedem angenommenen SOF wird das Zwischenregister mit der lokalen Zeitbasis geladen.

Referenzmarker: Wird die aktuelle Nachricht als Referenznachricht erkannt, dann wird der Wert aus dem Zwischenregister in den Referenzmarker übernommen (als lokale Referenzmarke). Der Referenzmarker wird z.B. als 16-Bit Register ausgelegt.

Zeitgeber-Referenzmarke: Das ist die von den Zeitnehmern empfangene Referenzmarke des Zeitgebers in der Referenznachricht.

Lokaler Offset zur Globalen Zeit: Der lokale Offset zur Globalen Zeit ist die Differenz zwischen der Referenzmarke im Zwischenregister und der in der Referenznachricht empfangenen Globalen Zeitmarke. Er wird zur Berechnung der Globalen Zeit aus der lokalen Zeit verwendet.
Der Offset des Zeitgebers selbst bleibt konstant. In der Referenznachricht sendet der Zeitgeber seine lokale Referenzmarke plus lokalem Offset.

Der Zeitgeber 101 ist also auch derjenige Knoten bzw. Teilnehmer, der die Zeitreferenznachricht 111 bzw. kürzer die Referenznachricht RN aussendet. Der Pfeil 112 zeigt an, dass die Referenznachricht RN 111 an die übrigen Teilnehmer 102 bis 105, insbesondere zeitgleich, versendet wird.

Die Referenznachricht RN ist die Basis für den zeitgesteuerten, periodischen Betrieb von TTCAN. Sie ist durch einen speziellen Identifier, eine spezielle Kennung, eindeutig gekennzeichnet und wird von allen Knoten, hier 102 bis 105, als Taktgeber empfangen. Sie wird von dem Zeitgeber 101 prinzipiell zyklisch ausgesendet. Die Referenznachricht kann folgende Daten beinhalten: Die Nummer des aktuellen Basiszyklus BZn, die Referenzmarke des Zeitgebers in Globaler Zeit.

Die Referenzmarke entsteht durch die Übernahme des internen Zählerstandes zum Zeitpunkt des "Start of Frame"-Bits (SOF) beim Empfang der Referenznachricht des Zeitgebers. Die Referenzmarke ist somit eine Momentaufnahme der lokalen Zeitbasis zum Empfangszeitpunkt der Referenznachricht. Die in den Teilnehmern aufgeführte Relative Zeit RZ1 bis RZ4 und RZg ist die Differenz zwischen der lokalen Zeitbasis und der letzten Referenzmarke. Alle Definitionen bezüglich der verwendeten Zeitmarken beziehen sich auf die Relative Zeit eines einzelnen Teilnehmers. Sie kann z.B. permanent als Signal vorliegen (z.B. durch Verknüpfung der beiden Registerwerte über Gatter). Die Referenzmarke bestimmt die Relative Zeit aller Knoten am TTCAN-Bus.

Der ebenfalls dargestellte Wartchdog Wg und W1 bis W4 ist ein spezieller relativer Zeitpunkt. In jedem Knoten wird ein solcher relativer Zeitpunkt (Watchdog) definiert, zu dem spätestens eine neue Referenznachricht und somit auch Referenzmarke erwartet wird. Der Watchdog stellt somit eine spezielle Zeitmarke dar. Der Watchdog dient vor allem in der Initialisierung und Reinitialisierung zur Überwachung, ob überhaupt eine Kommunikation zustande gekommen ist. Der Watchdog sollte in diesem Fall immer größer sein als der Abstand zwischen den Referenznachrichten.

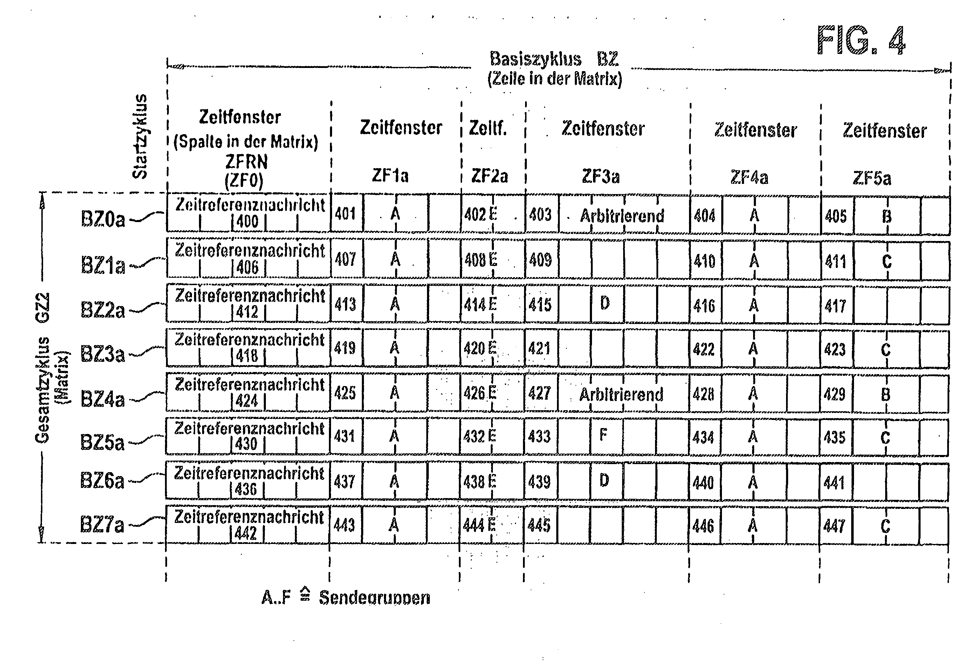

Dabei ist Eine Zeitmarke ein relativer Zeitpunkt, der die Beziehung zwischen der Relativen Zeit und einer Aktion im ursprünglichen Bus(CAN)-Controller herstellt. Eine Zeitmarke ist als Register dargestellt, wobei ein Controller mehrere Zeitmarken verwalten kann. Einer Nachricht können mehrere Zeitmarken zugeordnet sein (siehe z.B. in Figur 4: Sendegruppe A kommt sowohl in Zeitfenster ZF1a, als auch in Zeitfenster ZF4a vor).

Bezüglich der Applikation wird insbesondere ein Applikationswatchdog bedient. Dieser Watchdog muß von der Applikation regelmäßig bedient werden, um dem TTCAN-Controller den ordnungsgemäßen Betrieb zu signalisieren. Nur wenn dieser Watchdog bedient wird, werden die Nachrichten vom CAN-Controller gesendet.

Figur 2 zeigt das Prinzip der zeitgesteuerten, periodischen Nachrichten- bzw. Datenübertragung über der Zeit. Diese Nachrichtenübertragung wird durch den Zeitgeber mit Hilfe der Referenznachricht getaktet. Der Zeitraum t0 bis t6 wird dabei als Basiszyklus BZ bezeichnet und in k Zeitfenster (k ∈ N) unterteilt. Dabei werden von t0 bis t1, t6 bis t7, t12 bis t13 und t18 bis t19 also im Zeitfenster ZFRN die Referenznachrichten RN der jeweiligen Basiszyklen BZ0 bis BZ3 übertragen. Die Struktur der einer Referenznachricht RN nachfolgenden Zeitfenster ZF1 bis ZF5, also deren Länge (in Segmenten S mit Δts = tsb - tsa), deren Anzahl und deren zeitlichen Position, ist vorgebbar. Dadurch lässt sich aus mehreren Basiszyklen gleicher Struktur ein Gesamtzyklus GZ1 bilden, der bei t0 beginnt und bei t24 endet um erneut durchlaufen zu werden. Die Zeitfenster umfassen z.B. 2 bis 5 Segmente mit beispeilsweise je 32 Bitzeiten. Die Anzahl der Zeitfenster ist beispielsweise 2 bis 16, wobei auch nur ein Zeitfenster oder mehr als 16 möglich wären. Die Anzahl der Basiszyklen in einem Gesamtzyklus ist beispielsweise 2^{m} mit insbesondere m ≤ 4.

Mit tzff1 und tzff2 sind beispielhaft zwei Sendefreigabeintervalle bzw. Zeitfensterfreigabeintervalle gekennzeichnet, welche z.B. 16 oder 32 Bitzeiten dauern und den Zeitrahmen beschreiben innerhalb dessen mit dem Senden der Nachricht bezüglich des Basiszyklus begonnen werden darf.

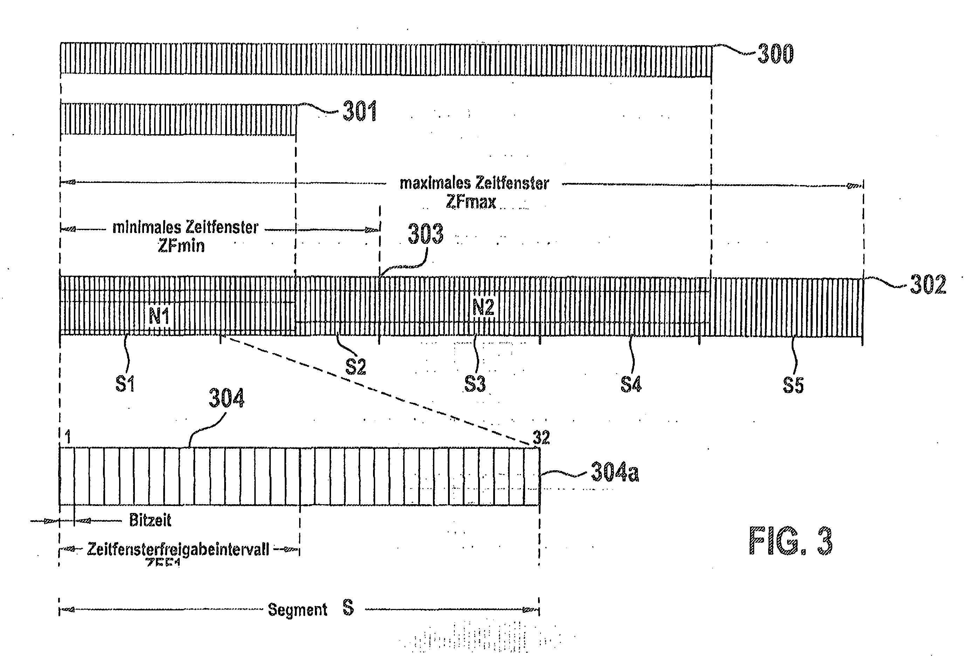

Jedes Zeitfenster erlaubt das exklusive Senden einer periodischen Nachricht mit unterschiedlicher Länge. In Figur 3 sind beispielhaft zwei Nachrichten unterschiedlicher Länge und die Zuordnung im Zeitfenster dargestellt. Nachricht 1 (N1) als Block 300 beinhaltet z.B. 130 Bit und Nachricht 2 (N2) als Block 301 beispielsweise 47 Bit.

Wie schon erwähnt können maximale und minimale Zeitfenster, abhängig von der Nachrichtenlänge vorgegeben werden, hier in diesem Beispiel z.B. zwischen 2 und 5 Segmenten pro Zeitfenster. Somit wird ein maximales Zeitfenster ZFmax als Block 302, das 5 Segmente (S1 bis S5) mit je 32 Bitzeiten umfasst und ein minimales Zeitfenster ZFmin als Block 303, welches 2 Segmente (S1 und S2) mit je 32 Bitzeiten umfasst vorgegeben. In diesen werden die Nachrichten N1 und N2 übertragen, wobei die Nachrichten also die Zeitfenster nicht vollständig ausfüllen müssen, vielmehr werden die Zeitfenstergrössen entsprechend der Nachrichtenlänge vorgegeben. ZFmax muss somit ausreichend Zeit bzw. Platz für die längste mögliche Nachricht, z.B.130 Bit bzw. Bitzeiten bieten und ZFmin kann an die kürzest mögliche Nachricht, z.B. 47 Bit, angepasst werden.

Generell ist das Zeitfenster der Zeitrahmen der für eine bestimmte Nachricht zur Verfügung steht (siehe Figur 3). Das Zeitfenster einer Nachricht wird mit dem Anliegen der Sendefreigabe geöffnet und der Beginn dieses Fensters stimmt prinzipiell mit einer definierten Zeitmarke überein. Die Länge des Zeitfensters wird aus i Segmenten mit beispielsweise 32 Bitzeiten (vgl Block 304a) bestimmt. Die Segmentierung zu insbesondere 32 Bitzeiten stellt dabei eine HW-freundliche Größe dar. Das Zeitfenster darf nicht kürzer sein, als die längste in diesem Zeitfenster vorkommende Nachricht. Die Bitzeit ist insbesondere die nominale CAN-Bitzeit.

Das Sendefreigabeintervall oder Zeitfensterfreigabeintervall beschreibt den Zeitrahmen, innerhalb dessen mit dem Senden der Nachricht begonnen werden darf. Das Sendefreigabeintervall ist ein Teil des Zeitfensters. Die Freigabe liegt also im Intervall Zeitmarke und Zeitmarke plus Delta an. Der Wert Delta ist deutlich kleiner als die Länge des Zeitfensters (z.B. 16 oder 32 Bitzeiten für ZFF1 oder ZFF2). Eine Nachricht deren Beginn nicht innerhalb des Sendefreigabeintervalls liegt, darf nicht gesendet werden.

Figur 4 stellt nun einen Gesamtzyklus (Sendematrix) GZ2 dar. Gesamtzyklus (Sendematrix): Alle Nachrichten (RN, A bis F und Arbitrierend) aller Teilnehmer werden als Komponenten einer Sendematrix organisiert (siehe Figur 4). Die Sendematrix besteht aus einzelnen Basiszyklen BZ0a bis BZ7a. Alle Basiszyklen des Gesamtzyklus GZ2 haben die gleiche Struktur. Diese Basiszyklen können wahlweise aus exklusiven (A bis F) und arbitrierenden Komponenten aufgebaut sein. Die Gesamtzahl der Zeilen (also Basiszyklen BZ0a bis BZ7a) ist hier eine Zahl 2^{m} = 8 mit m = 3.

Ein Basiszyklus (Zeile der Sendematrix) beginnt mit einer Referenzmarke in der Referenznachricht RN und besteht aus mehreren (i) aufeinander folgenden Zeitfenstern definierter Länge (erstes Zeitfenster ZF0 bzw. ZFRN für RN). Die Anordnung der Nachrichten innerhalb des Basiszyklus kann frei festgelegt werden. Ein Zeitfenster wird für exklusive Komponenten mit einem CAN Nachrichtenobjekt verknüpft. Ein Zeitfenster kann auch frei gelassen werden (409,421,441,417,445) oder für arbitrierende Komponenten genutzt werden (403, 427).

Eine Sendegruppe (Spalte der Sendematrix, A bis F) bilden Nachrichten, die immer im gleichen Zeitfenster, aber in unterschiedlichen Basiszyklen gesendet werden (siehe Figur 4). Somit kann eine Periode aufgebaut werden, z.B. A in ZF1a und ZF4a: 401,407,413,419,425,431,437,443 und 404,410,416,422,428,434,440,446. Innerhalb einer Sendegruppe kann ein Nachrichtenobjekt (eines Zeitfensters) mehrfach gesendet werden. Die Periode einer Nachricht innerhalb einer Sendegruppe muß eine Zahl 2¹ sein, wobei gilt: 1 <= m.

Das Nachrichtenobjekt bzw. die Nachricht entspricht dem Nachrichtenobjekt des Busses, insbesondere in CAN, und umfaßt den Identifier bzw. die Kennung sowie die Daten selbst. In TTCAN wird das Nachrichtenobjekt um wenigstens eine der folgenden Eintragungen, bevorzugter Weise um alle drei, in der Sendematrix ergänzt: Zeitfenster, Basismarke, Wiederholrate.

Das Zeitfenster ist die Position (ZF0, ZF1a bis ZF5a) im Basiszyklus (BZn, Zeile der Sendematrix). Der Beginn des Zeitfensters ist definiert durch Erreichen einer bestimmten Zeitmarke.

Die Basismarke gibt an, in welchem Basiszyklus (BZ0a bis BZ7a) im Gesamtzyklus die Nachricht erstmalig gesendet wird.

Die Wiederholrate definiert nach wievielen Basiszyklen diese Übertragung wiederholt wird.

Um die Gültigkeit eines Nachrichtenobjekts für den CAN-Controller zu kennzeichnen, gibt es ein "permanentes Senderequest", das eine permanente Freigabe des Objekts bedeutet (für exklusive Komponenten siehe unten) und ein "einzelnes Senderequest", das eine einmalige Gültigkeit des Objekts bedeutet (für arbitrierende Komponenten siehe unten).

Die automatische Retransmission aus CAN ist für die Nachrichten in TTCAN zweckmässigerweise ausgeschaltet.

Im weiteren wird nun nochmals die Nachrichtenübertragung - Periodische Nachrichten und Spontane Nachrichten im Basiszyklus bzw. im Gesamtzyklus, insbesondere bezüglich der Applikation, beschrieben. Dabei werden wieder exklusive Nachrichten also periodische Nachrichten und arbitrierende also spontane Nachrichten unterschieden.

### Exklusive Nachrichtenobjekte (periodische Nachrichten):

Exklusive Nachrichtenobjekte werden gesendet, wenn der Applikationswatchdog gesetzt ist, die "permanente Sendeanforderung" der Applikation an den CAN-Controller gesetzt ist und das Sendefreigabeintervall des zugehörigen Zeitfensters geöffnet ist. In diesem Fall stimmt die Zeitmarke für das Nachrichtenobjekt mit der Relativen Zeit überein. Die permanente Sendeanforderung bleibt gesetzt, bis sie von der Applikation selbst zurückgesetzt wird.

### Arbitrierende Nachrichtenobjekte (spontane Nachrichten):

Arbitrierende Nachrichtenobjekte werden gesendet, wenn der Applikationswatchdog gesetzt ist, die "einzelne Sendeanforderung" von der Applikation an den CAN-Controller gesetzt ist und das Sendefreigabeintervall des nächsten dafür bestimmten Zeitfensters geöffnet ist. Dann ist die Zeitmarke für dieses Zeitfenster gleich der Relativen Zeit. Die Sendeanforderung wird nach erfolgreichem Senden vom CAN-Controller zurückgesetzt. Der gleichzeitige Zugriff verschiedener spontaner Nachrichten wird über die Bitarbitrierung von CAN geregelt. Verliert eine spontane Nachricht in diesem Zeitfenster gegen eine andere spontane Nachricht, so kann sie erst im nächsten dafür bestimmten Zeitfenster wieder um den Buszugang kämpfen.

Wird die gesamte Sendematrix bzw. der Gesamtzyklus durchlaufen, so ergibt sich eine zyklische, zeitgesteuerte Nachrichtenübertragung. Zeitgesteuert bedeutet, daß jede Aktion vom Erreichen eines bestimmten Zeitpunkts ausgeht (siehe Zeitmarken und Relative Zeit). Ist der Gesamtzyklus vollständig durchlaufen, d.h. alle Basiszyklen wurden einmal abgearbeitet, so wird wieder mit dem ersten Basiszyklus der Sendematrix begonnen. Es entstehen keine zeitlichen Lücken im Übergang. Ein Überblick eines solchen zeitgesteuerten Kommunikationssystems mit Zeitgeber ist in der Beschreibung und den Figuren der Zeichnung dargestellt worden.

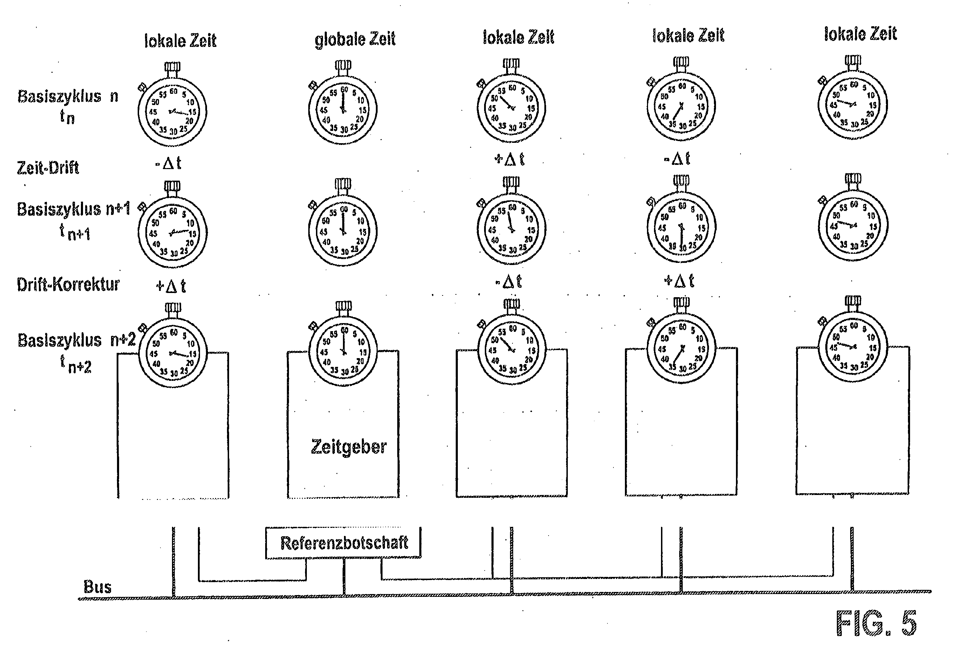

In Figur 5 ist in Anlehnung an Figur 1 ein System mit Teilnehmern und Bussystem dargestellt. Dabei wird in einem Basiszyklus n beginnend zum Zeitpunkt tn eine Zeit-Drift lokaler Zeiten bzw. Zeitbasen festgestellt. Im darauffolgenden Basiszyklus n+1 beginnend mit tn+1 erfolgt dann die Driftkorrektur. Im nächsten Basiszyklus n+2 beginnend mit tn+2 sind dann die Zeiten bzw. Zeitbasen korrigiert.

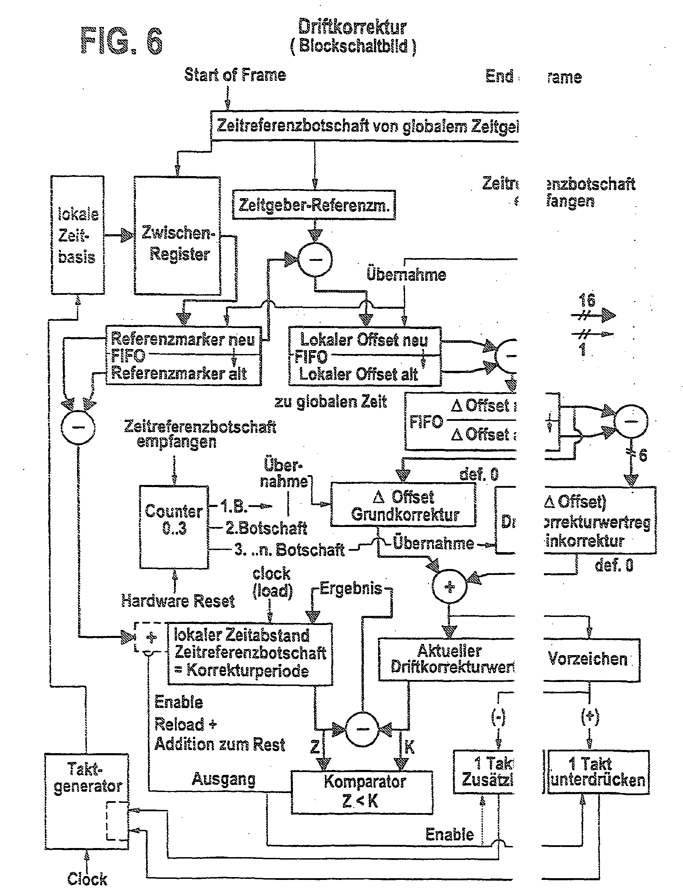

Figur 6 zeigt nun detailliert eine erfindungsgemässes Driftkorrektur. Jeder Knoten (TTCAN-Controller) enthält dabei:
- einen lokalen Oszillator der mit einem Zähler zusammen die lokale Zeit angibt
- einen Referenzmarker, in dem die lokale Zeit beim Empfang einer Referenzbotschaft zwischengespeichert wird. Der Referenzmarker ist vorteilhafterweise als 2-fach FIFO ausgelegt
- ein lokales Offsetregister (2-fach FIFO), das die Differenz zwischen lokaler Referenzmarke und der Zeitgeberreferenzmarke enthält
- ein Offset-Differenz-Register, das die Differenz der letzten beiden Offsets enthält
- ein Driftkorrekturwert-Register, das den Korrekturwert enthält, mit dem der lokale Zeitgeber nachkorrigiert werden muß
- ein Korrekturperioden-Register
In einen TTCAN-System wird jeder Basiszyklus mit einer Referenzbotschaft begonnen, in der ein Zeitbezug festgelegt wird und jeder Knoten den Abstand seiner lokalen Zeit zu dieser Referenz bestimmt.

Aus der Differenz der Abstände zweier Basiszyklen wird eine lokale Abweichung berechnet und ins Verhältnis zur Gesamtzeit gesetzt, woraus ein Grund-Korrekturwert für die lokale Zeit berechnet wird. Dieser Grund-Korrekturwert kann verfeinert werden, indem bei jedem weiteren Basiszyklus die Differenz der lokalen Abweichung mit zur Korrektur verwendet wird.
Zur einfachen Umsetzung des Algorithmus in Hardware oder Software, kann während einer Korrekturperiode (Basiszyklus) die üblicherweise nötige Quotientenbildung ersetzt werden durch eine Prüfung, wie oft der Korrekturwert in der Korrekturperiode enthalten ist. Dies kann z.B. durch eine wiederholte Subtraktion des Korrekturwerts von der Korrekturperiode in einem geeigneten Register geschehen, bis der Restwert kleiner dem Subtrahenten ist. Daraufhin wird je nach Vorzeichen der Korrekturwertänderung ein zusätzlicher Zählimpuls eingefügt oder weggelassen. Zum verbleibenden Restwert wird die Differenz zwischen den letzten beiden lokalen Referenzmarken addiert.
Bei eingeschwungenem System ist damit eine Synchronisation auf +/- eine Bitzeit über einen Basiszyklus möglich.

Die Begriffe Zeitreferenznachricht, Referenznachricht, Referenzbotschaft und Zeitreferenzbotschaft sind gleichbedeutend.

## Patentansprüche

1. Verfahren zum Austausch von Daten in Nachrichten zwischen wenigstens zwei Teilnehmern (101-105), welche mittels eines Bussystems (100) verbunden sind und eigene Zeitbasen (106-110) aufweisen,
wobei die die Daten enthaltenden Nachrichten durch die Teilnehmer über das Bussystem übertragen werden
und ein erster Teilnehmer (101) in einer Funktion als Zeitgeber die Nachrichten zeitlich derart steuert, dass er wiederholt eine Referenznachricht (RN), die eine Zeitinformation bezüglich der Zeitbasis (106) des ersten Teilnehmers enthält, in einem vorgebbaren zeitlichen Abstand (BZ) über den Bus überträgt,
und der zeitliche Abstand als Basiszyklus in Zeitfenster vorgebbarer Länge unterteilt wird, wobei die Nachrichten in den Zeitfenstern übertragen werden, wobei jeder erste Basiszyklus mit einer Referenznachricht gestartet wird und der wenigstens zweite Teilnehmer (102-105) einen Abstand seiner Zeitbasis (107-110) zur Zeitbasis (106) des ersten Teilnehmers ermittelt und
aus der Differenz zweier Abstände der Zeitbasen der wenigstens zwei Teilnehmer ein Korrekturwert ermittelt wird.

2. Verfahren nach Anspruch 1 **dadurch gekennzeichnet dass** aus der Differenz der Abstände zweiter Basiszyklen eine lokale Abweichung berechnet und ins Verhältnis zur Gesamtzeit gesetzt wird, woraus ein Grund-Korrekturwert für die lokale Zeit berechnet wird.

3. Verfahren nach Anspruch 1 oder 2, **dadurch gekennzeichnet, dass** der Grund-Korrekturwert verfeinert wird, indem bei jedem weiteren Basiszyklus die Differenz der lokalen Abweichung mit zur Korrektur verwendet wird.

4. Verfahren nach einem der Ansprüche 1 bis 3, **dadurch gekennzeichnet, dass** alle Nachrichten der wenigstens zwei Teilnehmer als Komponenten einer Sendematrix organisiert werden, die ihrerseits aus mehreren Basiszyklen besteht.

5. Verfahren nach einem der Ansprüche 1 bis 4, **dadurch gekennzeichnet, dass**
die Struktur eines Basiszyklus durch Festlegung wenigstens einer der Größen Länge, Anzahl oder zeitliche Position für die auf die Referenznachricht folgenden Zeitfenster gegeben ist.

6. Verfahren nach einem der Ansprüche 1 bis 5, **dadurch gekennzeichnet, dass** mehrere erste Basiszyklen gleicher Struktur zu einem zweiten Zyklus als Gesamtzyklus zusammengefasst werden, wobei in dem zweien Zyklus auch Nachrichten in Zeitfenstern wiederholt übertragen werden, deren zeitlicher Abstand größer ist als die zeitliche Länge des ersten Zyklus.

7. Verfahren nach einem der Ansprüche 1 bis 6, **dadurch gekennzeichnet, dass** in wenigstens einem Zeitfenster eines Basiszyklus eine zyklische Nachrichtenübertragung unterbleibt und in diesem Zeitfenster arbitrierende Nachrichten übertragen werden.

8. Verfahren nach einem der Ansprüche 1 bis 7, **dadurch gekennzeichnet, dass** sich aus der ersten Zeitinformation des ersten Teilnehmers als Zeitgeber die globale Zeit (gZ) für das Bussystem ergibt.

9. Vorrichtung zum Austausch von Daten in Nachrichten zwischen wenigstens zwei Teilnehmern (101-105), welche mittels eines Bussystems (100) verbunden sind und eigene Zeitbasen (106-110) aufweisen,
wobei die die Daten enthaltenden Nachrichten durch die Teilnehmer über das Bussystem übertragen werden
und ein erster Teilnehmer (101) in einer Funktion als Zeitgeber die Nachrichten zeitlich derart steuert, dass er wiederholt eine Referenznachricht (RN), die eine Zeitinformation bezüglich der Zeitbasis (106) des ersten Teilnehmers enthält, in einem vorgebbaren zeitlichen Abstand (BZ) über den Bus überträgt,
und der zeitliche Abstand als Basiszyklus in Zeitfenster vorgebbarer Länge unterteilt wird, wobei die Nachrichten in den Zeitfenstern übertragen werden, wobei jeder erste Basiszyklus mit einer Referenznachricht gestartet wird und der wenigstens zweite Teilnehmer (102-105) einen Abstand seiner Zeitbasis (107-110) zur Zeitbasis (106) des ersten Teilnehmers ermittelt und
aus der Differenz zweier Abstände der Zeitbasen der wenigstens zwei Teilnehmer ein Korrekturwert ermittelt wird

## Claims

1. Method for the exchange of data in messages between at least two subscribers (101-105) who are connected by means of a bus system (100) and have their own time bases (106-110), wherein the messages containing the data are transmitted by the subscribers via the bus system and a first subscriber (101), in a function as timer, controls the messages in time in such a manner that he repeatedly transmits a reference message (RN) which contains a time information with respect to the time base (106) of the first subscriber in a predeterminable time interval (BZ) via the bus, and the time interval as base cycle is subdivided into time windows of predeterminable length, the messages being transmitted in the time windows, wherein each first base cycle is started with a reference message, and the at least second subscriber (102-105) determines a distance of his time base (107-110) from the time base (106) of the first subscriber and, from the difference of two distances of the time bases of the at least two subscribers, a correction value is determined.

2. Method according to Claim 1, **characterized in that** a local deviation is calculated from the difference between the distances of two base cycles and is related to the total time, from which a basic correction value for the local time is calculated.

3. Method according to Claim 1 or 2, **characterized in that** the basic correction value is refined by concomitantly using the difference in the local deviation for correction in each further base cycle.

4. Method according to any of Claims 1 to 3, **characterized in that** all messages from the at least two subscribers are organized as components of a transmission matrix which in turn consists of a plurality of base cycles.

5. Method according to any of Claims 1 to 4, **characterized in that** the structure of a base cycle is given by stipulating at least one of the variables of length, number or position in time for the time windows following the reference message.

6. Method according to any of Claims 1 to 5, **characterized in that** several first base cycles of identical structure are combined to form a second cycle as total cycle, wherein, in the second cycle, messages are also repeatedly transmitted in time windows, the time interval of which is greater than the length in time of the first cycle.

7. Method according to any of Claims 1 to 6, **characterized in that** in at least one time window of a base cycle, a cyclic message transmission is omitted and arbitrating messages are transmitted in this time window.

8. Method according to any of Claims 1 to 7, **characterized in that** the first time information of the first subscriber as timer produces the global time (gZ) for the bus system.

9. Device for the exchange of data in messages between at least two subscribers (101-105) who are connected by means of a bus system (100) and have their own time bases (106-110), wherein the messages containing the data are transmitted by the subscribers via the bus system and a first subscriber (101), in a function as timer, controls the messages in time in such a manner that he repeatedly transmits a reference message (RN) which contains a time information with respect to the time base (106) of the first subscriber and the time interval as base cycle is subdivided into time windows of predeterminable length, the messages being transmitted in the time windows, wherein each first base cycle is started with a reference message, and the at least second subscriber (102-105) determines a distance of his time base (107-110) from the time base (106) of the first subscriber and, from the difference of two distances of the time bases of the at least two subscribers, a correction value is determined.

## Revendications

1. Procédé d'échange de données par échange de messages entre au moins deux abonnés (101-105) reliés au moyen d'un système de bus (100) et dotés de leur propre base de temps (106-110), les messages qui contiennent les données étant transmis par les abonnés par l'intermédiaire du système de bus et un premier abonné (101) qui assure la fonction d'horloge commandant temporellement les messages en transmettant de manière répétée sur le bus et à un écart temporel (BZ) prédéterminable un message de référence (RN) qui contient une information temporelle concernant la base de temps (106) du premier abonné, et l'écart temporel comme cycle de base étant divisé en fenêtres temporelles de longueur prédéterminable, les messages étant transmis dans les fenêtres temporelles, chaque premier cycle de base étant lancé par un message de référence et le ou les deuxièmes abonnés (102-105) déterminant l'écart de leur base temporelle (107-110) par rapport à la base temporelle (106) du premier abonné et une valeur de correction étant déterminée à partir de la différence entre deux écarts des bases temporelles des deux ou plusieurs abonnés.

2. Procédé selon la revendication 1, **caractérisé en ce qu'**un écart local est calculé à partir de la différence entre les écarts de deux cycles de base et est rapporté au temps total, permettant de calculer une valeur de correction de base pour le temps local.

3. Procédé selon la revendication 1 ou 2, **caractérisé en ce que** la valeur de correction de base est affinée en utilisant conjointement la différence de l'écart local pour la correction lors de chaque cycle de base suivant.

4. Procédé selon l'une quelconque des revendications 1 à 3, **caractérisé en ce que** tous les messages des deux ou plusieurs abonnés sont organisés en tant que composants d'une matrice d'émission qui se compose pour sa part de plusieurs cycles de base.

5. Procédé selon l'une quelconque des revendications 1 à 4, **caractérisé en ce que** la structure d'un cycle de base est donnée en fixant au moins l'une des grandeurs longueur, nombre ou position temporelle pour les fenêtres temporelles suivant le message de référence.

6. Procédé selon l'une quelconque des revendications 1 à 5, **caractérisé en ce que** plusieurs premiers cycles de base de même structure sont rassemblés en un deuxième cycle comme cycle total, des messages étant également transmis de manière répétée au cours du deuxième cycle dans les fenêtres temporelles dont l'écart temporel est plus long que la longueur temporelle du premier cycle.

7. Procédé selon l'une quelconque des revendications 1 à 6, **caractérisé en ce que** la transmission cyclique de messages est interrompue dans au moins une fenêtre temporelle d'un cycle de base et **en ce que** des messages d'arbitrage sont transmis dans cette fenêtre temporelle.

8. Procédé selon l'une quelconque des revendications 1 à 7, **caractérisé en ce que** le temps global (gZ) du système de bus découle de la première information temporelle du premier abonné qui joue le rôle d'horloge.

9. Dispositif d'échanges de données par échange de messages entre aux moins deux abonnés (101-105) reliés au moyen d'un système de bus (100) et dotés de leur propre base de temps (106-110),
les messages qui contiennent les données étant transmis par les abonnés par l'intermédiaire du système de bus et un premier abonné (101) qui assure la fonction d'horloge commandant temporellement les messages en transmettant sur le bus, de manière répétée et à un écart temporel (BZ) prédéterminable un message de référence (RN) qui contient une information temporelle sur la base de temps (106) du premier abonné, et l'écart temporel comme cycle de base étant divisé en fenêtres temporelles de longueur prédéterminable, les messages étant transmis dans les fenêtres temporelles, chaque premier cycle de base étant lancé par un message de référence et le ou les deuxièmes abonnés (102-105) déterminant l'écart de leur base temporelle (107-110) par rapport à la base temporelle (106) du premier abonné et une valeur de correction étant déterminée à partir de la différence entre deux écarts des bases temporelles des deux ou plusieurs abonnés.
